# EUROPEAN PATENT APPLICATION

(11) **EP 1 361 704 A1**
(43) Date of publication of application: **12.11.2003**
(21) Application number: 02253221.2
(22) Date of filing: 08.05.2002
(51) Int. Cl.: H04L 12/56, H04L 29/06

(54) **Method and apparatus for checking sequence numbers when communicating messages in a UMTS network**

(71) Applicant: LUCENT TECHNOLOGIES INC., Murray Hill, New Jersey 07974-0636 (US)
(72) Inventor: Afshartous, David, London NW8 7DA (GB); Cao, Qiang, Swindon, Wilts SN2 3XL (GB); Young, Gordon, Bracknell, Berkshire RG42 1YL (GB)
(74) Representative: Sarup, David Alexander

(57) **Abstract**

In a method of communicating messages between a transmitter and receiver in a Universal Mobile Telecommunications System UMTS network, each message is sent in sequence and includes a sequence number. An expected sequence number which is stored in the receiver is incremented upon receipt of a message. The received sequence number in the message is decoded and compared to the incremented expected sequence number. If the numbers match the message is further decoded.

## Description

### Technical Field

The present invention relates to a method of communicating messages between a transmitter and receiver in a Universal Mobile Telecommunications System UMTS network, a method of receiving messages at a receiver in a UMTS network, a UMTS network, and a UMTS receiver.

### Background of the Invention

In a Universal Mobile Telecommunications System UMTS network, which includes user terminals communicating with a UMTS terrestrial radio access network UTRAN, security has two aspects. One is integrity protection, which is applied on signalling messages. The other is ciphering, which is applied to both signalling and user data. Integrity protection ensures that the received signalling message cannot have been altered by an unauthorised third party, whereas ciphering function ensures that the message data contents are not disclosed to any authorised party.

As regards the integrity protection aspect, as that is specified for UMTS, both the user terminal (user equipment) UE and the UMTS terrestrial radio access network UTRAN perform a specific integrity algorithm in accordance with the Third Generation Partnership Project 3GPP standards, as described in particular 3GPP Technical Specification 33.102. This algorithm, which is a KASUMI based algorithm, is known as the Integrity Protection f9 Algorithm. Apart from the desired integrity checking, performing the f9 algorithm results in delay being introduced. Most received messages are subject to an integrity check using the f9 before further processing. Another consequence is high consumption of power needed to run the integrity checks. This has a significant impact on the limited battery life of a user terminal UE.

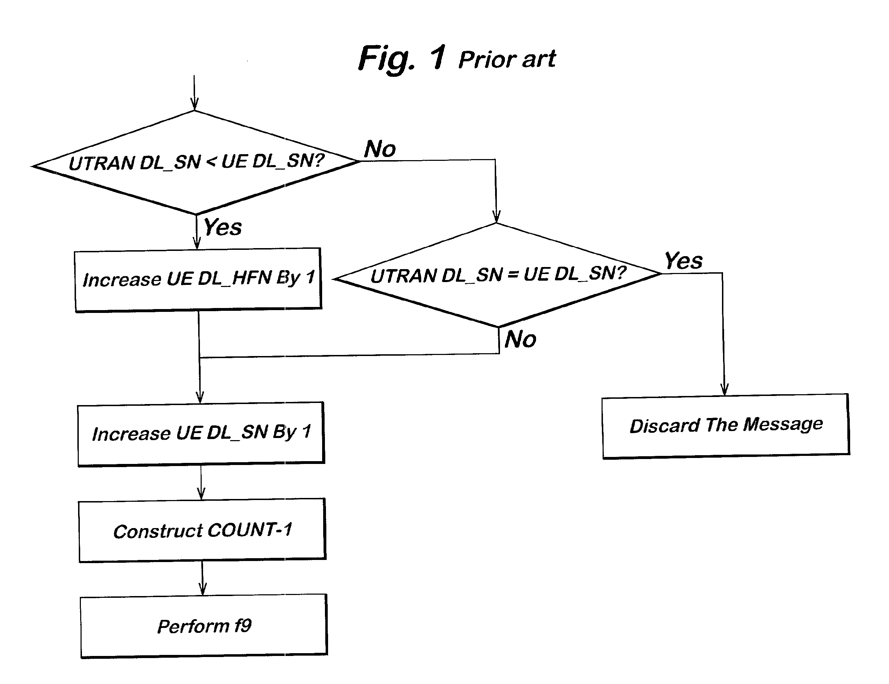

Figure 1 shows the known 3GPP standards approach to downlink DL integrity checking by the user terminal UE, i.e. when the user terminal UE receives a signalling message from the UMTS terrestrial radio access network UTRAN. The following three parameters are used, as shown in Figure 1:
UTRAN DL_SN : this is the UMTS terrestrial radio access network UTRAN downlink sequence number DL_SN added to the downlink message by the UTRAN network;
UE DL_SN : this is the user terminal downlink sequence number UE DL_SN variable stored in and used by the user terminal UE control activation of the protection algorithm, f9. This is taken from the received message (UTRAN DL_SN).
UE DL_HFN : this is the user terminal UE downlink hypertrame number DL_HFN stored in user terminal UE used together with the UTRAN downlink sequence number UTRAN DL_SN to produce a parameter known as the COUNT-I parameter required together with others as input into the f9 algorithm.

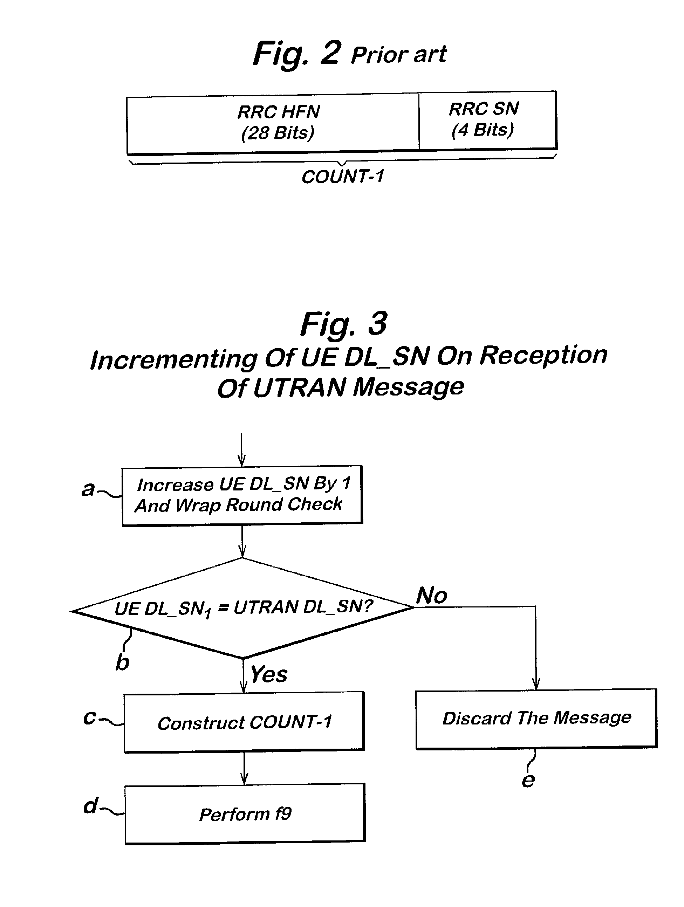

The COUNT-I parameter is an integrity sequence number. As shown in Figure 2, COUNT-I is composed of two parts: a "short" sequence number and a "long" sequence. The "short" sequence number is the 4-bit radio resource control sequence number (RRC SN). The "long" sequence number is the 28-bit radio resource control hyper frame number (RRC HFN) which is incremented when the radio resource control sequence number RRC SN wraps around. For the downlink, the radio resource control sequence number RRC SN is the 4 bit number UTRAN DL_SN included in each message from the transmitter. Each new message has the UTRAN DL_SN sequence number incremented by 1 from the UTRAN DL_SN sequence number in the previous (in sequence) message.

As shown in Figure 1, the value of this sequence number is compared to the value for the related parameter UE DL_SN stored in the receiver as part of the verification of the message, and if the received sequence number is equal to the stored sequence number the message is discarded, else, the integrity protection algorithm f9 is performed, in the following cases:
1) Normal case, i.e that case where COUNT-I is assumed correct i.e where received sequence number is one greater than the stored sequence number i.e. UTRAN DL_SN = UE DL_SN+1.
2) An abnormal case, where the received sequence number is more than one greater than the stored sequence number i.e. UTRAN DL_SN > UE DL_SN+ 1,
3) The case where the received sequence number is less than the stored sequence number i.e. UTRAN DL_SN< UE DL_SN.

Only in case 1) (and case 3 when UTRAN DL_SN wraps around) does the message go on to be fully processed.

In case 3) the stored hyperframe number UE DL_HFN is incremented, as shown in Figure 1. However, in case 3 when wrap around does not occur an increase in hyperframe number UE DL_HFN will then still lead to failure of the integrity check using the f9 algorithm, and so to unnecessary processing, following which the stored UE DL_HFN must be decremented.

### Summary of the Invention

The present invention provides a method of communicating messages between a transmitter and receiver in a Universal Mobile Telecommunications System UMTS network, each message being sent in sequence and including a sequence number, an expected sequence number stored in the receiver being incremented upon receipt of a message, the received sequence number in the message being decoded and compared to the incremented expected sequence number and if the numbers match the message is further decoded. The present invention also provides a corresponding method of receiving messages at a receiver in a UMTS network, a corresponding UMTS network, and a corresponding UMTS receiver.

The present invention provides improvements over the known approach defined in the UMTS standard. The present invention in its preferred embodiments advantageously avoids running the integrity check algorithm on known invalid messages. A simple mechanism is provided to determine whether to proceed to performing an f9 integrity check of the message without unnecessary activation of the f9 check. Preferred embodiments of the present invention advantageously provide that by increasing user terminal downlink sequence number UE DL_SN by 1 and perform a check for 'wrap around'check, followed by a check if user terminal downlink sequence number UE DL_SN is equal to UTRAN DL_SN, the f9 algorithm is only performed when user terminal UE COUNT-I is correct (i.e. would match a UTRAN COUNT-I), hence avoiding unnecessary running of f9. Advantages of preferred embodiments of the invention include reducing processing requirements, hence reducing processing delay and coping with less processing power; saving power, hence prolonging user terminal UE battery life; and providing a simpler approach requiring less complicated testing.

Preferably upon receipt of a message, the expected sequence number is incremented by plus one.

Preferably the stored sequence number is such that after reaching a maximum value upon a further increment the stored sequence number reverts to or through zero, whereupon a stored secondary count is incremented.

Preferably the stored sequence number is 4 bits, increments are by plus one such that the next incremented sequence number after a 1111 value is a 0000 value, and the stored secondary count is up to 28 bits.

Preferably upon the numbers matching, a value is determined of a COUNT-I parameter which depends upon the incremented stored sequence number, the COUNT-I parameter value being used in the so-called f9 integrity checking method.

Preferably the COUNT-I parameter value depends on the incremented stored sequence number and the secondary count.

The present invention also provides a method of receiving messages at a receiver in a Universal Mobile Telecommunications System UMTS network, each message including a sequence number, an expected sequence number stored in the receiver being incremented upon receipt of a message, the received sequence number in the message being decoded and compared to the incremented expected sequence number and if the numbers match the message is further decoded.

The present invention also provides a Universal Mobile Telecommunications System UMTS network comprising a base station and a plurality of user terminals, the base station being operative to send each message to a user terminal in sequence, each message including a sequence number, an expected sequence number stored in the user terminal being incremented upon receipt of a message, in the user terminal the received sequence number in the message being decoded and compared to the incremented expected sequence number and if the numbers match the message is further decoded.

The present invention also provides a Universal Mobile Telecommunications System UMTS receiver operative to receive messages each including a sequence number, the receiver including a data store which stores a sequence number, the stored sequence number being incremented upon receipt of a message (to form the expected sequence number), the receiver comprising a decoder and a comparitor, the decoder being operative to decode a received sequence number in the message, and the comparitor being operative to compare the received sequence number to the incremented stored sequence number (expected sequence number) and if the numbers match the message is further decoded. Preferably the receiver is a user terminal.

### Brief Description of the Drawings

A preferred embodiment of the present invention will now be described by way of example and with reference to the drawings, in which:
Figure 1 is a flowchart illustration of a known integrity check procedure(prior art),
Figure 2 shows the structure of the COUNT-I parameter (prior art), and
Figure 3 is a diagrammatic illustration of an integrity check procedure according to the present invention.

### Detailed Description

It was realised that as the UMTS terrestrial radio access network UTRAN is always expected to increase the sequence number UTRAN DL_SN of successive new messages by 1, the user terminal UE on reception of a new message can increment its stored sequence number UE DL_SN by 1, and compare it with the sequence number value sent by the UMTS terrestrial radio access network UTRAN to determine whether they match. This ensures a received sequence number and stored hyperframe number are not used by the user terminal UE to construct a COUNT-I which would definitely lead to the f9 algorithm check indicating a failure. This ensures that should the f9 check fail, that failure will be due to the value of some other input parameter into the f9 check algorithm being invalid, rather than the value of COUNT-I.

The variables shown in Figure 3 as in Figure 1 represent the following parameters: UTRAN DL_SN is the sequence number added to the downlink message by the UMTS terrestrial radio access network UTRAN, UE DL_SN is the sequence number variable stored in the user terminal UE (previously taken from the received message UTRAN DL_SN), and UE DL_HFN is the variable stored in the user terminal UE and incremented when the UE DL_SN wraps around. The UE DL_HFN is used with the UTRAN DL_SN as illustrated in figure 2, where the UE DL_HFN makes up the 28 MSB and the UTRAN DL_SN (generically referred to as the RRC SN) makes up the 4 LSB of the COUNT-I parameter to input into the f9 algorithm.

As shown in Figure 3, upon receipt of a message, the user terminal's downlink sequence number UE DL_SN value is now increased by 1 which we will refer to as UE DL_SN₁,and a wrap-around check performed (shown as step a in Figure 3). The wrap-around check is to determine whether to increase the hyperframe number UE DL_HFN by 1 as well, which would be necessary to provide a correct COUNT-I value. The UTRAN downlink sequence number UTRAN DL_SN is incremented by 1 in each new message, which is sent from the transmitter (the UTRAN network). When incrementing the sequence number causes the four bit binary value '1111' to become the binary value '0000' it is said to wrap around. To keep note of this at the user terminal in the context of determining COUNT-I when this wrap around occurs, the value of the hyperframe number UE DL_HFN stored in the user terminal needs to be incremented by 1.

This is followed by determining whether newly incremented UE DL_SN₁ is equal to UTRAN DL_SN (shown as step b in Figure 3). If these two are equal the COUNT-I value is produced (shown as step c in Figure 3) and used in performing an f9 check (shown as step d in Figure 3)and the UE DL_SN₁ is stored in the UE as the UE DL_SN for the reception of the next UTRAN message.

This check ensures that whenever the received sequence number does not match that expected i.e. UE DL_SN₁ ≠ UTRAN DL_SN, the f9 check is not run. Instead, the message is discarded (shown as step e in Figure 3).
This includes the cases where the received sequence number is greater than the UE expected sequence number i.e. UTRAN DL _SN > UE DL_SN₁ or the received sequence number is less than the UE expected sequence number i.e. UTRAN DL _SN < UE DL_SN₁, the message is discarded without the resource demanding f9 algorithm being executed.

This approach ensures that before performing the integrity check f9 algorithm, the UE COUNT-I is correct i.e. in line with the UTRAN COUNT-I, so integrity is possible. Unnecessary running of the f9 integrity check algorithm is thus avoided.

In an alternative embodiment, a corresponding approach is used at the base station for communications on the uplink i.e. from a user terminal to a base station of a network. In a further embodiment the approach is used at both ends (i.e base station of the UTRAN, and user terminal) for incoming communications, i.e. for both uplink and downlink communications.

## Claims

1. A method of communicating messages between a transmitter and receiver in a Universal Mobile Telecommunications System UMTS network,
each message being sent in sequence and including a sequence number,
an expected sequence number stored in the receiver being incremented upon receipt of a message.
the received sequence number in the message being decoded and compared to the incremented expected sequence number and if the numbers match the message is further decoded.

2. A method according to claim 1, in which upon receipt of a message, the expected sequence number is incremented by plus one.

3. A method according to claim 1 or claim 2, in which the stored sequence number is such that after reaching a maximum value upon a further increment the stored sequence number reverts to or through zero, whereupon a stored secondary count is incremented.

4. A method according to claim 3, in which the stored sequence number is 4 bits, increments are by plus one such that the next incremented sequence number after a 1111 value is a 0000 value, and the stored secondary count is up to 28 bits.

5. A method according to any of claims 1 to 4, in which upon the numbers matching, a value is determined of a COUNT-I parameter which depends upon the incremented stored sequence number, the COUNT-I parameter value being used in the so-called f9 integrity checking method.

6. A method according to claim 5 as dependent upon claim 3 or claim 4, in which the COUNT-I parameter value depends on the incremented stored sequence number and the secondary count.

7. A method of receiving messages at a receiver in a Universal Mobile Telecommunications System UMTS network,
each message including a sequence number,
an expected sequence number stored in the receiver being incremented upon receipt of a message,
the received sequence number in the message being decoded and compared to the incremented expected sequence number and if the numbers match the message is further decoded.

8. A Universal Mobile Telecommunications System UMTS network comprising a base station and a plurality of user terminals,
the base station being operative to send each message to a user terminal in sequence, each message including a sequence number,
an expected sequence number stored in the user terminal being incremented upon receipt of a message,
in the user terminal the received sequence number in the message being decoded and compared to the incremented expected sequence number and if the numbers match the message is further decoded.

9. A Universal Mobile Telecommunications System UMTS receiver operative to receive messages each including a sequence number,
the receiver including a data store which stores an expected sequence number, the stored expected sequence number being incremented upon receipt of a message,
the receiver comprising a decoder and a comparitor, the decoder being operative to decode a received sequence number in the message, and the comparitor being operative to compare the received sequence number to the stored incremented expected sequence number and if the numbers match the message is further decoded.

10. A receiver according to claim 9, which is a user terminal.
